# FASCICULE DE BREVET EUROPEEN

(11) **EP 4 556 271 B1**
(45) Date de publication et mention de la délivrance du brevet: **19.08.2026**
(21) Numéro de dépôt: 24306889.7
(22) Date de dépôt: 11.11.2024
(51) Int. Cl.: B60J 7/06

(54) **ENSEMBLE DE RECOUVREMENT POUR VÉHICULE, ET VÉHICULE COMPORTANT UN TEL ENSEMBLE**
ABDECKANORDNUNG FÜR EIN FAHRZEUG UND FAHRZEUG MIT EINER SOLCHEN ABDECKANORDNUNG
COVERING ASSEMBLY FOR A VEHICLE, AND VEHICLE COMPRISING SUCH AN ASSEMBLY

(30) Priorité: 17.11.2023 FR 2312648
(43) Date de publication de la demande: 21.05.2025
(73) Titulaire: Fruehauf, 89002 Auxerre (FR)
(72) Inventeur: LAFONT, Jean-François, 89560 OUANNE (FR)
(74) Mandataire: Santarelli

(56) Documents cités:
- EP-A1- 3 118 038
- WO-A1-2010/053224
- DE-A1- 102012 216 151

## Description

### DOMAINE TECHNIQUE DE L'INVENTION

La présente invention concerne un ensemble de recouvrement configuré pour équiper un véhicule.

La présente invention concerne en outre un véhicule, notamment du type remorque pour camion, comportant un tel ensemble de recouvrement.

### ÉTAT DE LA TECHNIQUE

Il existe des camions pourvus d'une remorque qui est surmontée d'une structure de recouvrement comportant une bâche au moins partiellement flexible et un mécanisme configuré pour entraîner cette bâche.

Une telle bâche peut être montée sur le dessus, c'est-à-dire sur le toit, de la remorque, ou bien sur les côtés de la remorque, et peut présenter une configuration dépliée dans laquelle elle ferme totalement le dessus et/ou le côté de la remorque, et une configuration repliée ou partiellement repliée dans laquelle elle autorise l'accès complètement ou partiellement à une ouverture d'accès formée sur le dessus et/ou sur le côté de la remorque, par exemple pour son chargement et/ou son déchargement.

De tels camions peuvent être pourvus d'un mécanisme d'entrainement configuré pour déplacer la structure de recouvrement depuis sa configuration dépliée vers sa configuration repliée ou partiellement repliée, et inversement.

Par exemple, la demande internationale WO 2009/027285 décrit un mécanisme d'entrainement formé de câbles longeant la remorque et enserrés dans des mâchoires assujetties à la structure de recouvrement, et d'un moteur électrique configuré pour entraîner les câbles et ainsi déplacer la structure de recouvrement.

Dans la demande WO 2009/027285, les mâchoires peuvent être ouvertes pour libérer les câbles pour intervenir sur la structure de recouvrement.

La demande DE 10 2012 216 151 A1 divulgue également un ensemble de recouvrement pour un camion avec un mécanisme d'entraînement.

### EXPOSÉ DE L'INVENTION

L'invention vise à fournir un ensemble de recouvrement configuré pour équiper un véhicule qui soit particulièrement simple et commode tant à la fabrication, au montage, qu'à l'utilisation.

L'invention a ainsi pour objet, sous un premier aspect, un ensemble de recouvrement configuré pour équiper un véhicule, comportant une structure de recouvrement mobile à coulissement par rapport au véhicule et un mécanisme d'entrainement configuré pour faire passer la structure de recouvrement depuis une configuration dépliée vers une configuration repliée ou partiellement repliée, et inversement, la structure de recouvrement comportant à une première extrémité un volet de verrouillage qui est articulé et configuré pour admettre une position rabattue et une position relevée ;
le mécanisme d'entrainement comportant un câble d'entrainement et un dispositif d'entrainement pourvu d'un organe de serrage configuré pour admettre une position de serrage du câble d'entraînement et une position de desserrage du câble d'entraînement, ainsi qu'un dispositif d'actionnement assujetti mécaniquement d'une part à l'organe de serrage et d'autre part au volet de verrouillage, et qui est configuré pour mettre en appui l'organe de serrage contre le câble d'entrainement lorsque le volet de verrouillage est articulé depuis sa position rabattue vers sa position relevée et pour écarter l'organe de serrage du câble d'entrainement lorsque le volet de verrouillage est articulé depuis sa position relevée vers sa position rabattue.

L'ensemble de recouvrement selon l'invention permet sélectivement d'assujettir ou désassujettir la structure de recouvrement et le câble d'entrainement l'un à l'autre, de sorte à entraîner ou non la structure de recouvrement en coulissement pour couvrir et découvrir le véhicule.

Dans l'ensemble selon l'invention, le volet de verrouillage sert non seulement à verrouiller la structure de recouvrement dans une configuration dépliée dans laquelle elle recouvre le véhicule, mais aussi à actionner le dispositif d'entrainement.

En particulier, selon le sens d'articulation du volet de verrouillage, ce dernier permet de désassujettir le câble d'entrainement et la structure de recouvrement lorsque cette dernière est verrouillée dans sa configuration dépliée, ou d'assujettir le câble d'entrainement et la structure de recouvrement lorsque la structure de recouvrement n'est pas verrouillée, dans sa configuration dépliée ou dans une configuration repliée ou partiellement repliée.

Il en résulte une manipulation particulièrement rapide, fiable et aisée de l'ensemble de recouvrement, par le biais du volet de verrouillage.

D'autres caractéristiques particulièrement simples et commodes de l'ensemble de recouvrement selon l'invention sont décrites ci-après.

L'organe de serrage est mobile en rotation entre la position de serrage du câble d'entraînement et la position de desserrage du câble d'entraînement.

Le dispositif d'entrainement comprend un élément de rappel configuré pour rappeler l'organe de serrage dans sa position de desserrage.

L'organe de serrage comporte une came mobile en rotation et à laquelle est assujetti le dispositif d'actionnement, la came étant configurée pour être progressivement mise en appui contre le câble d'entrainement lorsque le volet de verrouillage est articulé depuis sa position rabattue vers sa position relevée, et pour être progressivement écartée du câble d'entrainement lorsque le volet de verrouillage est articulé depuis sa position relevée vers sa position rabattue.

Le mécanisme d'entrainement comporte une platine de montage assujettie mécaniquement à la structure de recouvrement, et une patte de support assujettie mécaniquement à la platine de montage et supportant l'organe de serrage, avec le câble d'entrainement qui est disposé entre l'organe de serrage et la platine de montage.

Le dispositif d'actionnement est configuré pour transformer un mouvement d'articulation du volet de verrouillage en un mouvement de rotation de l'organe de serrage.

Le dispositif d'actionnement est configuré pour transformer un mouvement d'articulation du volet de verrouillage en un mouvement intermédiaire de translation, et pour transformer le mouvement intermédiaire de translation en un mouvement de rotation de l'organe de serrage.

Le dispositif d'actionnement comporte au moins une biellette assujettie mécaniquement à l'organe de serrage et un corps d'attache assujetti mécaniquement d'une part au volet de verrouillage et d'autre part à l'au moins une biellette.

Le corps d'attache comprend une fenêtre de guidage dans laquelle l'au moins une biellette peut coulisser.

L'au moins une biellette comporte une première partie de biellette et une deuxième partie de biellette, et un mécanisme d'ajustement reliant la première partie de biellette et la deuxième partie de biellette et configuré pour faire varier en longueur ladite au moins une biellette.

Le dispositif d'actionnement comporte une première biellette assujettie mécaniquement au corps d'attache, une deuxième biellette assujettie mécaniquement à l'organe de serrage, et une tige de liaison mobile en translation et reliant mécaniquement la première biellette et la deuxième biellette.

Le volet de verrouillage comporte un organe de rappel configuré pour rappeler le volet de verrouillage respectivement dans sa position relevée et dans sa position rabattue.

L'invention a aussi pour objet, sous un deuxième aspect, un véhicule, notamment du type remorque pour camion, comportant un ensemble de recouvrement tel que décrit ci-dessus.

D'autres caractéristiques particulièrement simples et commodes du véhicule selon l'invention sont décrites ci-après.

Le véhicule comprend un toit et un châssis en regard du toit et définissant avec le toit, des côtés du véhicule et dans l'ensemble de recouvrement, la structure de recouvrement est formée par une bâche au moins partiellement flexible et montée sur le toit du véhicule ou sur au moins un des côtés du véhicule.

Le véhicule comprend au moins une paire de longerons sur lesquels la structure de recouvrement est montée mobile à coulissement, et un panneau agencé en saillie du châssis vers le toit du véhicule et sur lequel le volet de verrouillage est configuré pour être rabattu dans une configuration dans laquelle la structure de recouvrement est dépliée et recouvre le toit ou un des côtés du véhicule.

Le véhicule comprend un système motorisé configuré pour entrainer en coulissement la structure de recouvrement et qui est agencé sur le panneau du véhicule ou sur ou sous le châssis.

### BRÈVE DESCRIPTION DES FIGURES

L'invention, selon un exemple de réalisation, sera bien comprise et ses avantages apparaitront mieux à la lecture de la description détaillée qui suit, donnée à titre indicatif et nullement limitatif, en référence aux dessins annexés dans lesquels :
- la figure 1 illustre schématiquement un véhicule de type camion, pourvue d'une remorque équipée d'un ensemble de recouvrement selon l'invention ;
- la figure 2 illustre en perspective l'ensemble de recouvrement selon l'invention ainsi qu'un panneau avant du véhicule duquel s'étend l'ensemble de recouvrement ;
- la figure 3 représente partiellement en perspective un mécanisme d'entrainement et un volet de verrouillage de l'ensemble de recouvrement de la figure 2, le volet étant ici en position relevée;
- la figure 4 est une vue similaire à la figure 3, dans laquelle le volet de verrouillage est représenté en position rabattue ;
- la figure 5 est une vue en perspective éclatée du mécanisme d'entrainement et du volet de verrouillage de l'ensemble de recouvrement représentés sur les figures 2 à 4 ;
- la figure 6 et la figure 7 sont des vues similaires à la figure 3, prises en vue de dessous et selon deux angles de vue différents ;
- la figure 8 et la figure 9 sont des vues similaires à la figure 4, prises en vue de dessous et selon deux angles de vue différents ;

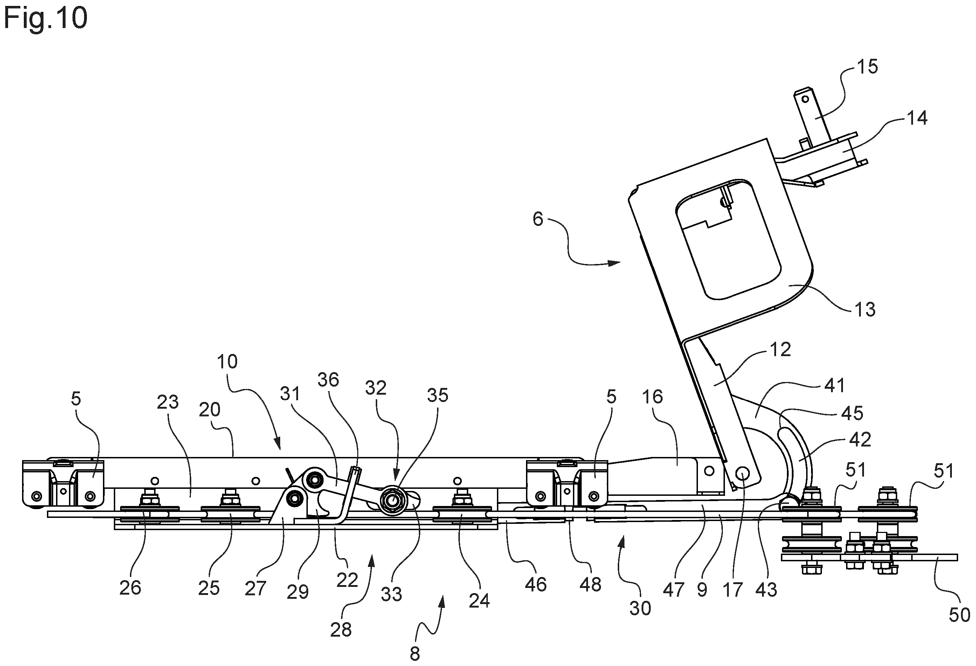

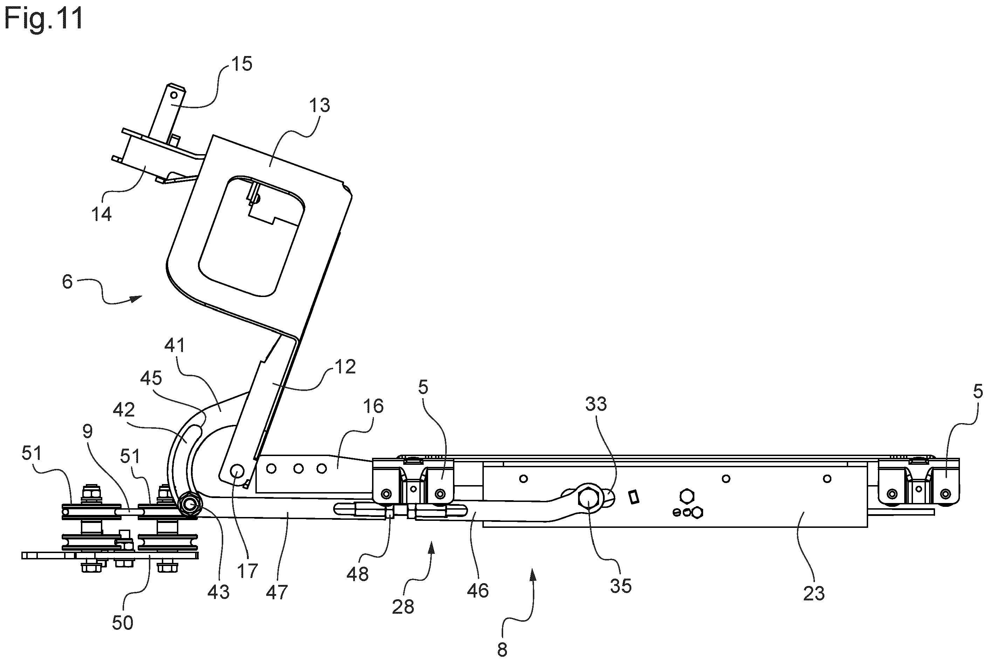

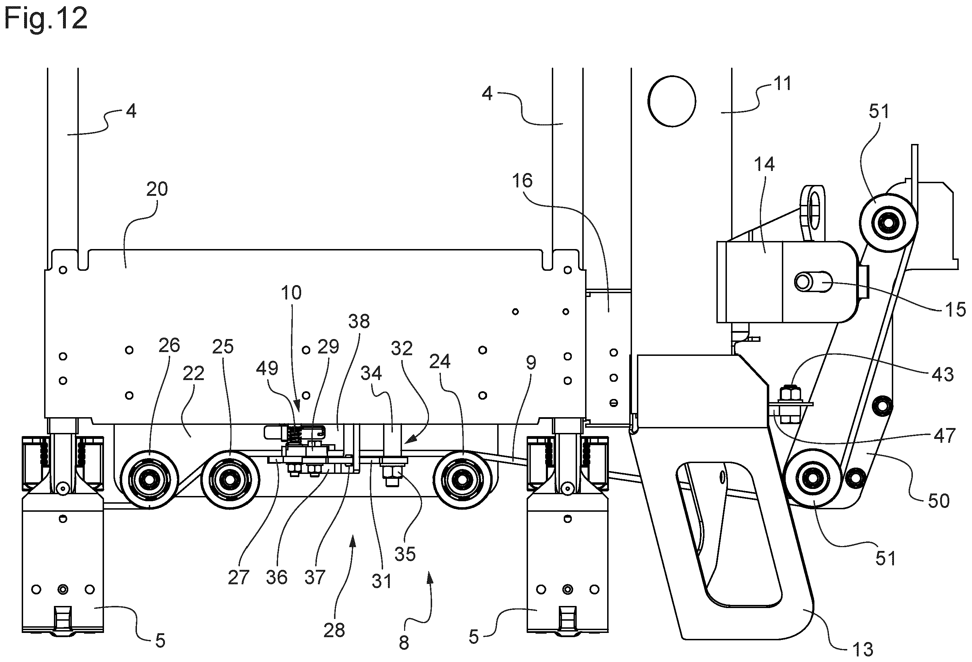

- la figure 10, la figure 11 et la figure 12 sont aussi des vues similaires à la figure 3, prises en vue de côtés et en vue de dessus ;

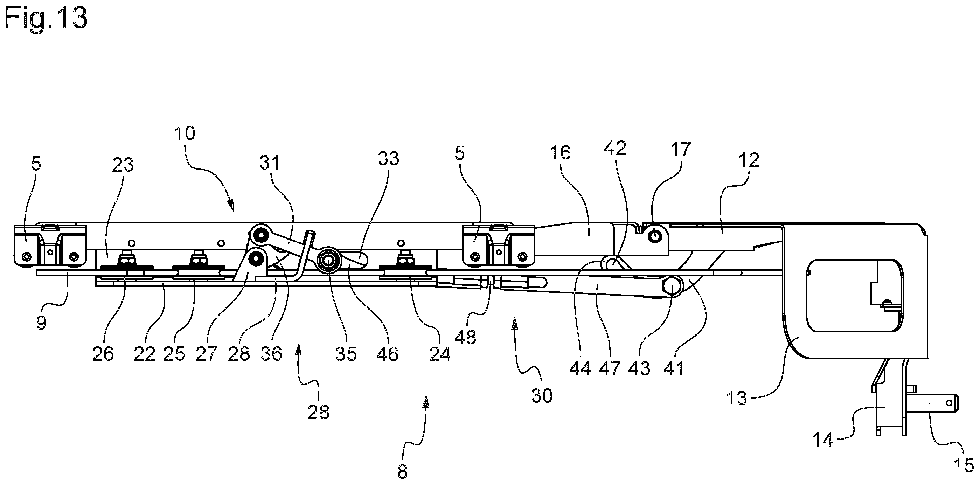

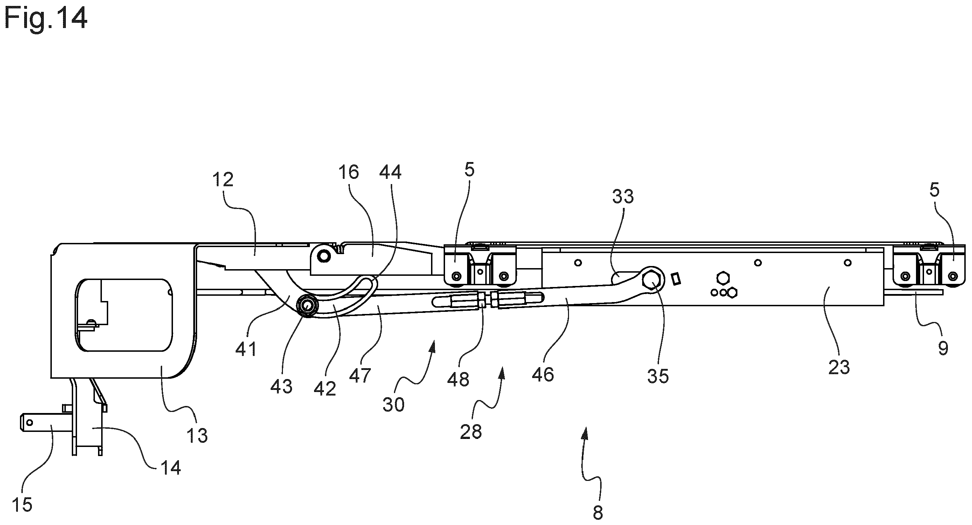

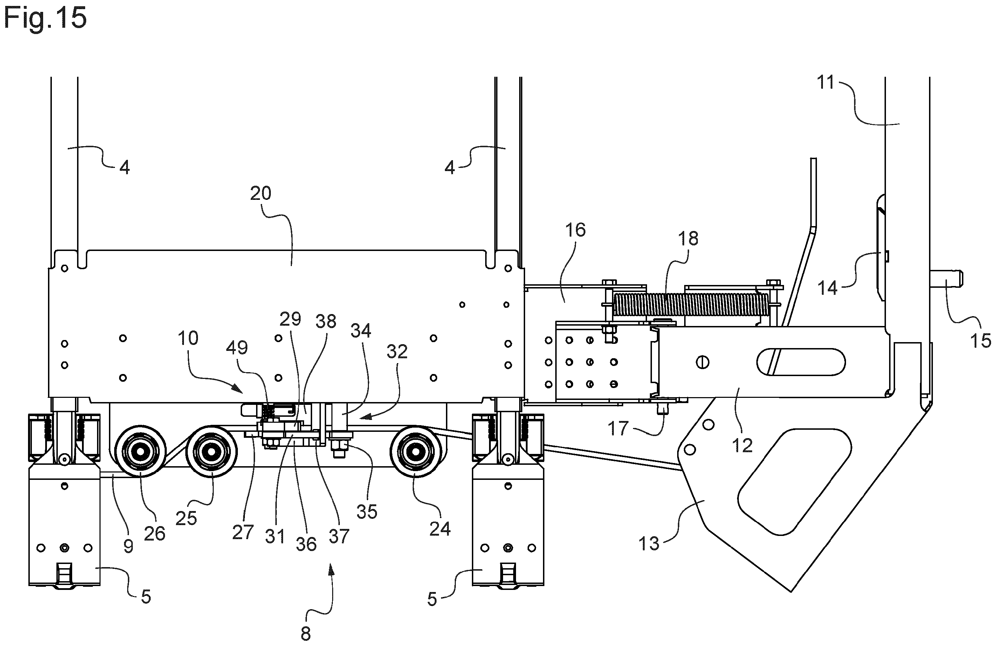

- la figure 13, la figure 14 et la figure 15 sont aussi des vues similaires à la figure 4, prises en vue de côtés et en vue de dessus.

### DESCRIPTION DÉTAILLÉE DE L'INVENTION

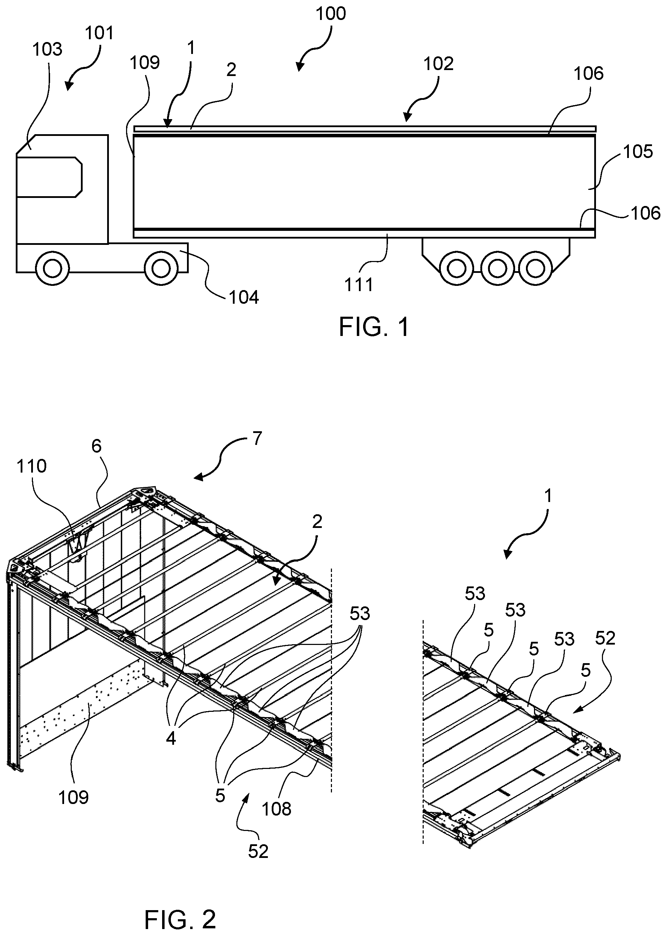

La figure 1 illustre schématiquement un véhicule 100 de type camion avec remorque, équipé d'un ensemble de recouvrement 1 conforme à l'invention, tandis que la figure 2 illustre plus en détail l'ensemble de recouvrement 1.

Le véhicule 100 comprend un tracteur 101, et une remorque ou semi-remorque 102 qui y est attelée.

Le tracteur 101 comprend notamment une cabine 103 et une sellette 104 servant à l'attelage de la remorque 102.

La remorque 102 comprend ici une caisse 105 destinée à recevoir une charge à transporter, telle que des marchandises.

La remorque 102 comprend ici un châssis 111, sur lequel est agencé la caisse 105 qui s'étend ainsi entre le châssis 111 et le toit de la remorque 102.

La caisse 105 comprend des longerons 106 s'étendant au niveau du toit de la remorque 102 dans une direction générale longitudinale de la remorque 102, au moins une traverse (non représentée) s'étendant dans une direction générale transversale du véhicule 100, ainsi que des rails de guidage 108, dits supérieurs, qui sont assujettis mécaniquement et mobiles à coulissement sur les longerons 106 situés au niveau du toit.

Les longerons 106 situés au niveau du toit et la traverse définissent ensemble une ouverture d'accès supérieure.

La caisse 105 peut aussi comprendre d'autres longerons 106 s'étendant au niveau du châssis 111 dans une direction générale longitudinale de la remorque 102, et d'autres rails de guidage, dit latéraux, qui sont assujettis mécaniquement et mobiles à coulissement sur les longerons 106 dits latéraux.

Le cas échéant, les longerons situés au niveau du châssis ensemble avec les longerons au niveau du toit peuvent définir une ou des ouvertures d'accès latérales.

La remorque 102 comprend un panneau avant 109 agencé sur le châssis 111, et qui referme une face de la caisse 105 dirigée vers l'avant du véhicule.

L'ensemble de recouvrement 1 est ici monté au niveau de la caisse 105 de la remorque 102.

L'ensemble de recouvrement 1 comporte une structure de recouvrement 2 qui peut admettre une configuration dépliée, dans laquelle elle recouvre la remorque 102, et une configuration repliée ou partiellement repliée, dans laquelle elle découvre au moins partiellement la remorque 102.

Dans l'exemple illustré, la structure de recouvrement 2 est configurée pour recouvrir le toit de la remorque 102, c'est-à-dire le dessus de la remorque 102.

En variante, la remorque peut comprendre un ou plusieurs ensembles de recouvrement comprenant une structure de recouvrement configurée pour recouvrir au moins un côté de la remorque plutôt que le toit ou en plus du toit.

La structure de recouvrement 2 peut être formée par une bâche, qui peut par exemple être renforcée ou non, notamment avec des éléments de renfort soudés et ou intégrés à la bâche.

En particulier, la structure de recouvrement 2 peut comprendre un mécanisme d'articulation 52 comportant une pluralité d'arceaux 4 configurés pour supporter la structure de recouvrement 2. Les arceaux 4 s'étendent globalement transversalement à une direction générale longitudinale de la remorque 102 et de la structure de recouvrement 2.

Le mécanisme d'articulation 52 peut en outre comporter une pluralité de corps de chariot 5 configurés pour être montés coulissant sur les rails de guidage 108, de part et d'autre du support de remorque 102.

Chacun des corps de chariot 5 est configuré pour être assujetti mécaniquement à un arceau 4, de sorte à rendre la structure de recouvrement 2 mobile en translation sur les rails de guidage 108.

Le mécanisme d'articulation 52 comporte en outre une pluralité de dispositifs d'articulation qui sont distincts des corps de chariot 5 et qui sont configurés pour être assujettis mécaniquement à ces derniers.

Chaque arceau 4 est ici configuré en outre pour être assujetti mécaniquement à la fois à un corps de chariot 5 et à un dispositif d'articulation.

Le mécanisme d'articulation 52 comporte en outre une pluralité de compas 53 qui sont pliables et configurés pour être assujettis mécaniquement par une extrémité à un dispositif d'articulation et par une extrémité opposée à un autre dispositif d'articulation.

Les compas 53 sont prévus pour supporter aussi la structure de recouvrement.

La structure de recouvrement 2 est configurée pour être assujettie aux arceaux 4, de sorte qu'elle est entraînée en déplacement avec ces derniers.

En particulier, le coulissement des corps de chariot 5 sur les rails de guidage 108 entraîne le déplacement des arceaux 4 le long du support de remorque ainsi que l'articulation des compas 53 qui passent d'une configuration déployée sensiblement à plat à une configuration érigée, permettant ainsi aux corps de chariot 5, aux dispositifs d'articulation et aux arceaux 4 de se rapprocher respectivement les uns des autres.

La structure de recouvrement 2 est ainsi configurée pour être assujettie mécaniquement à coulissement sur les rails de guidage 108 et pour être passée de l'une à l'autre de la configuration dépliée dans laquelle elle ferme totalement ou quasiment totalement l'ouverture d'accès, qu'elle soit située au niveau du toit ou d'un côté de la remorque 102, et de la configuration repliée ou partiellement repliée dans laquelle elle autorise complètement ou partiellement l'accès à l'ouverture d'accès, par exemple pour le chargement et/ou le déchargement de la remorque 102.

La structure de recouvrement 2 comporte un volet de verrouillage 6 à une première extrémité 7 de la structure de recouvrement 2.

Le volet de verrouillage 6 est configuré pour permettre de verrouiller/déverrouiller la structure de recouvrement 2 dans sa configuration dépliée, ici en particulier en se bloquant/débloquant mécaniquement sur le panneau avant 109 de la remorque 102.

En d'autres termes, lorsque le volet de verrouillage 6 est bloqué sur le panneau avant 109 (comme sur la figure 2), la structure de recouvrement 2 est fixe ; tandis que lorsque le volet de verrouillage 6 est débloqué du panneau avant 109, la structure de recouvrement 2 peut être mobile à coulissement.

Le volet de verrouillage 6 est monté de façon articulée sur la première extrémité 7, c'est-à-dire qu'il peut pivoter par rapport à la première extrémité 7.

Ici, le volet de verrouillage 6 peut pivoter selon un axe de rotation qui s'étend dans une direction générale transversale à la remorque 102.

En outre, la remorque 102 peut comprendre un système motorisé 110 configuré pour entrainer la structure de recouvrement 2 en translation le long des rails de guidage 108.

En particulier lorsque la structure de recouvrement 2 est configurée pour recouvrir le toit de la remorque 102, le système motorisé 110 peut par exemple être monté en tout ou partie sur le panneau avant 109 du véhicule, tel que cela est représenté sur la figure 2.

En variante, lorsque la structure de recouvrement est configurée pour recouvrir un côté de la remorque, le système motorisé peut par exemple être monté sur ou sous le châssis du véhicule.

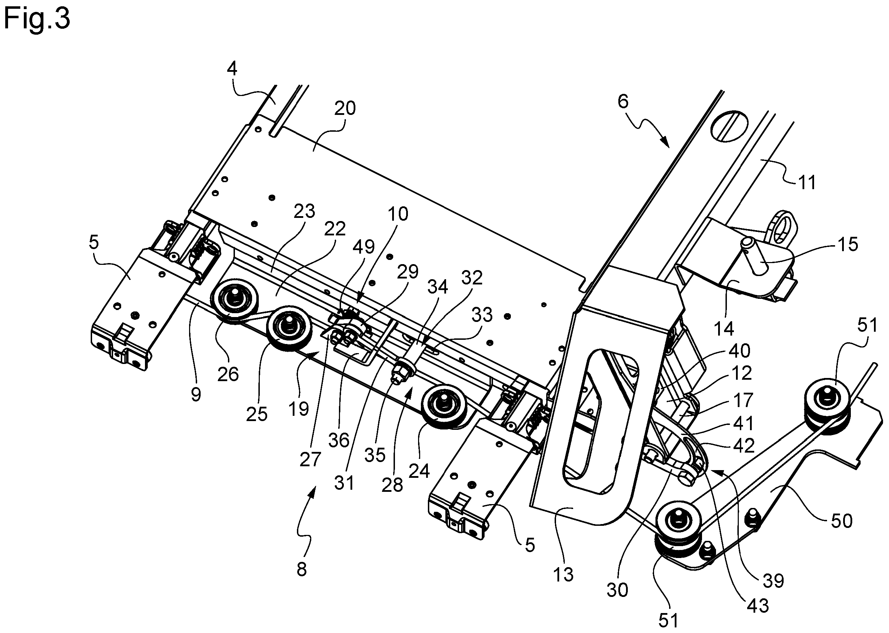

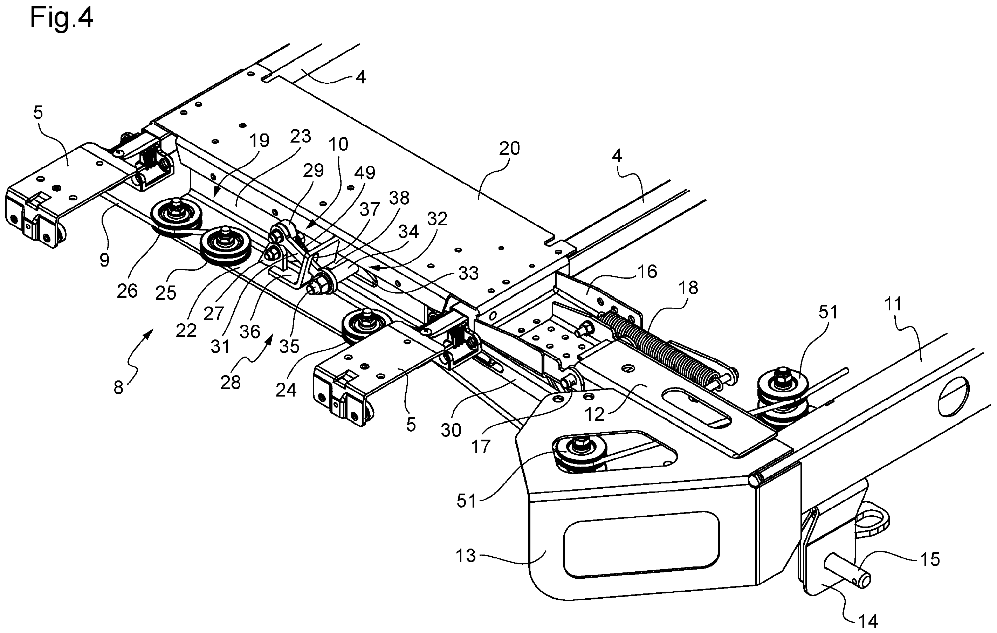

Les figures 3 et 4 montrent plus en détail le volet de verrouillage 6 dans deux positions différentes qu'il peut adopter. En particulier, le mécanisme d'articulation 52 n'est pas représenté intégralement, et notamment les compas 54 ne sont pas visibles sur ces figures.

D'une part, le volet de verrouillage 6 peut admettre une position dite rabattue, telle qu'elle est représentée sur la figure 3 notamment, dans laquelle il se trouve sensiblement dans le même plan que le reste de la structure de recouvrement 2.

D'autre part, le volet de verrouillage 6 peut également admettre une position dite relevée, telle qu'elle est représentée sur la figure 4 notamment, dans laquelle il saille hors du plan principal dans lequel s'étend le reste de la structure de recouvrement 2.

La position relevée du volet de verrouillage 6 peut désigner une position relevée verticalement dans le cas d'une structure de recouvrement 2 configurée pour recouvrir le toit du véhicule.

En variante, la position relevée peut désigner une position relevée latéralement, c'est-à-dire saillant du côté du véhicule, dans le cas d'une structure de recouvrement configurée pour recouvrir un côté du véhicule.

Par exemple, l'angle formé entre la position rabattue et la position relevée du volet de verrouillage 6 est d'environ 100°.

Dans sa position rabattue, le volet de verrouillage 6 permet de verrouiller, c'est-à-dire maintenir, la structure de recouvrement 2 dans sa position déployée, en se bloquant mécaniquement sur le panneau avant 109.

Lorsque le volet de verrouillage 6 est relevé, le blocage mécanique sur le panneau avant 109 est levé, et la structure de recouvrement 2 peut passer dans une configuration repliée ou partiellement repliée.

L'ensemble de recouvrement 1 comporte un mécanisme d'entrainement 8 qui est configuré pour faire passer la structure de recouvrement 2 de la configuration dépliée vers la configuration repliée ou partiellement repliée, et inversement.

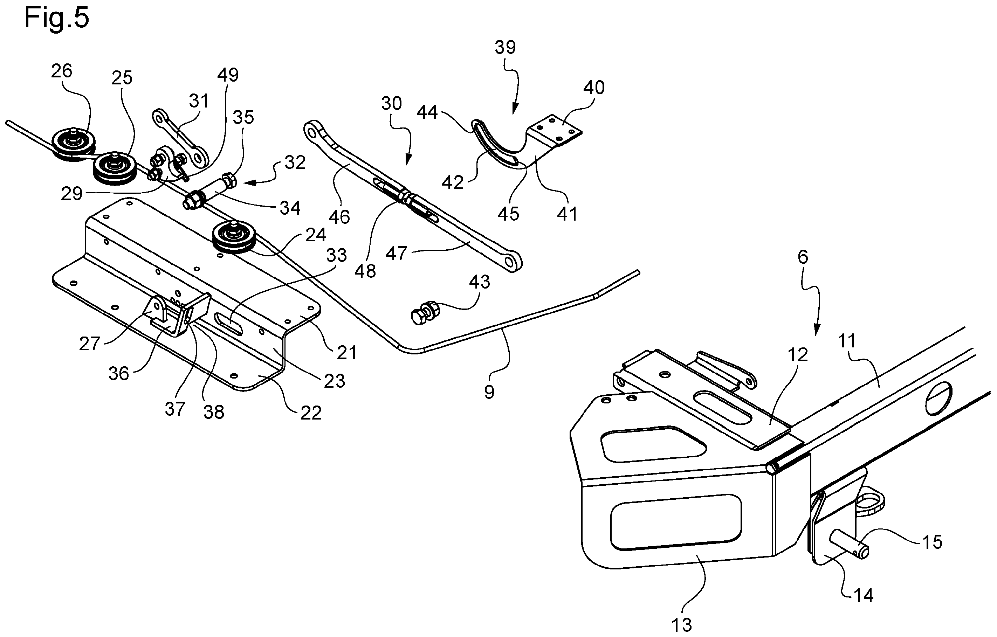

En se référant aux figures 3 et 4, ainsi qu'à la figure 5 qui illustre selon une vue éclatée notamment le mécanisme d'entrainement 8, le mécanisme d'entrainement 8 et le volet de verrouillage 6 vont maintenant être décrits plus en détail.

Le mécanisme d'entrainement 8 comprend un câble d'entrainement 9 qui est configuré pour entrainer en mouvement la structure de recouvrement 2.

Le câble 9 s'étend ici globalement dans la direction longitudinale générale longitudinale de la remorque.

Le mécanisme d'entrainement 8 comprend également un dispositif d'entrainement 10 qui est configuré pour sélectivement assujettir et désassujettir le câble d'entrainement 9 et la structure de recouvrement 2, ce qui respectivement permet et empêche le déplacement de la structure de recouvrement 2 lorsque le câble d'entrainement 9 est mis en mouvement.

Le volet de verrouillage 6 comporte ici un élément de traverse 11, et deux portions d'articulation 12 s'étendant chacune depuis une extrémité de l'élément de traverse 11, dans une direction globalement orthogonale à l'élément de traverse 11.

En outre, le volet de verrouillage 6 peut être muni d'une ailette latérale 13 à chacune des extrémités de l'élément de traverse 11, et qui s'étend ici globalement en biais en direction de l'arrière de la remorque 102.

Le volet de verrouillage 6 peut comporter une patte de verrouillage 14 à au moins une des extrémités de l'élément de traverse 11, et qui s'étend globalement orthogonalement depuis ce dernier.

La patte de verrouillage 14 peut comporter un doigt de verrouillage 15 configuré pour coopérer avec un organe de verrouillage (non représenté) présenté sur le panneau avant 109 du véhicule, de façon à maintenir le volet de verrouillage 6 en position rabattue.

A sa première extrémité 7, la structure de recouvrement 2 comporte ici une paire de platines d'articulation 16 assujetties mécaniquement à une portion d'extrémité d'un corps de chariot 5 assemblée sur un arceau 4 extrémal, avec les portions d'articulation 12 qui sont montées articulées sur les platines d'articulation 16 par l'intermédiaire d'un pivot d'articulation 17 du volet de verrouillage 6.

Le volet de verrouillage 6 peut également être muni d'un ou plusieurs organes de rappel 18 configurés pour maintenir le volet de verrouillage 6 respectivement en position relevée et en position rabattue.

Par exemple, un organe de rappel 18 est formé par un ressort de traction s'étendant entre une platine d'articulation 16 et une portion d'articulation 12 correspondante, et agencé de sorte à rappeler le volet de verrouillage 6 en position relevée.

La structure de recouvrement 2 comporte au moins une plaque de montage 20 qui s'étend entre l'arceau 4 extrémal et l'arceau 4 qui lui est adjacent, et qui est fixée mécaniquement à ces derniers.

Autrement dit, ici les deux derniers arceaux 4 de la structure de recouvrement 2 ne sont pas mobiles l'un par rapport à l'autre, mais sont reliés mécaniquement de façon rigide par la plaque de montage 20.

Chacune des platines d'articulation 16 peut être réalisée d'un seul tenant avec une plaque de montage 20, ou peut être rapportée et assujettie mécaniquement à cette dernière.

La plaque de montage 20 comporte ici une platine de montage 19, qui permet d'assujettir mécaniquement le dispositif d'entrainement 10 à la structure de recouvrement 2.

La platine de montage 19 est fixée, par exemple par boulonnage, à la plaque de montage 20.

La platine de montage 19 présente une section globalement en forme de marche ou de casquette.

En particulier dans l'exemple illustré, la platine de montage 19 comporte une première portion 21 (visible en figure 5 notamment) et une deuxième portion 22 s'étendant dans deux plans parallèles distincts, et une troisième portion 23 reliant la première portion 21 et la deuxième portion 22 et s'étendant dans un plan sensiblement orthogonal aux deux plans parallèles distincts.

La première portion 21 est assujettie à la plaque de montage 20, par exemple par boulonnage ou vissage, tandis que la deuxième portion 22 saille latéralement vers l'extérieur de la structure de recouvrement 2, de sorte à se trouver en regard du câble d'entrainement 9.

En particulier, le dispositif d'entrainement 10 comporte une pluralité de roues de guidage qui servent à guider le câble d'entrainement 9 en vis-à-vis de la deuxième portion 22 depuis et vers le système motorisé 110.

Une première roue de guidage 24 et une deuxième roue de guidage 25 sont agencées de sorte à guider le câble d'entrainement 9 à proximité de la troisième portion 23, c'est-à-dire que le câble d'entrainement 9 court entre les premières roues de guidage 24 et la troisième portion 23.

Une troisième roue de guidage 26 est agencée de sorte à guider le câble d'entrainement 9 en éloignement de la troisième portion 23, c'est-à-dire que le câble d'entrainement 9 court à l'extérieur de la troisième roue de guidage 26 par rapport à la troisième portion 23.

La troisième roue de guidage 26 est agencée sur la deuxième portion 22 d'un côté opposé au côté faisant face au volet de verrouillage 6.

Ainsi, les première, deuxième et troisième roues de guidage 24 à 26 permettent, partant du côté faisant face au volet de verrouillage 6 vers le côté opposé, de guider le câble d'entrainement 9 d'abord en rapprochement de la troisième portion 23, puis en éloignement de la troisième portion 23 jusqu'à ce qu'il quitte la platine de montage 19 en direction de l'arrière du véhicule.

Les première, deuxième et troisième roues de guidage 24 à 26 peuvent chacune être fixées à rotation sur la platine de montage 19, par exemple par boulonnage, avec leurs axes de rotation qui sont globalement orthogonaux par rapport à la deuxième portion 22.

Comme cela est visible sur les figures 3 et 4, le système motorisé 110 peut comprendre une platine de guidage 50 destinée à être assujettie au panneau avant 109, ainsi que des roulettes 51 permettant de guider le câble d'entrainement 9, ici depuis une direction sensiblement transversale de la remorque 102 vers une direction sensiblement longitudinale de la remorque 102, de sorte à guider le câble jusqu'à la première roue de guidage 24.

Le dispositif d'entrainement 10 comprend en outre un organe de serrage, permettant de serrer le câble d'entrainement 9.

Dans l'exemple illustré, la platine de montage 19 présente une patte de support 27 saillant de la deuxième portion 22, et qui sert à supporter l'organe de serrage.

L'organe de serrage comporte une came 29, qui est ici montée à rotation sur la patte de support 27.

La came 29 comporte une portion de came qui est configurée pour entrer en contact avec le câble d'entrainement 9.

La came 29 est disposée sur la patte de support 27 en vis-à-vis du câble d'entrainement 9, qui se trouve entre la came 29 et la deuxième portion 22.

La came 29 peut admettre une position de serrage, dans laquelle elle est mise en appui contre le câble d'entrainement 9 de sorte à le serrer entre la came 29 et la deuxième portion 22, et une position de desserrage, dans laquelle le câble d'entrainement 9 est libre entre la came 29 et la deuxième portion 22.

Lorsque la came 29 est en position de serrage, un assujettissement par liaison de force et en particulier, par friction, entre le câble d'entrainement 9 d'une part et la came 29 et la platine de montage 19 d'autre part, est réalisé.

Ainsi, lorsque le câble d'entrainement 9 est mis en mouvement, il entraîne avec lui la platine de montage 19 et donc la structure de recouvrement 2 qui lui est assujettie.

Lorsque la came 29 est en position de desserrage, le câble d'entrainement 9, et la came 29 et la platine de montage 19 ne sont plus assujettis les uns aux autres, et la structure de recouvrement 2 n'est pas entraînée, même en cas de mouvement du câble d'entrainement 9.

Le dispositif d'entrainement 10 peut comprendre un élément de rappel 49, qui permet de rappeler la came 29 en position de desserrage, et qui peut par exemple être formé par un ressort à épingle.

Le mécanisme d'entrainement 8 comporte en outre un dispositif d'actionnement 28, qui est configuré pour entrainer en mouvement l'organe de serrage lorsque le volet de verrouillage 6 est déplacé en rotation entre sa position rabattue et sa position relevée, et inversement.

Plus précisément, le mécanisme d'entrainement 8 permet de déplacer la came 29 dans sa position de serrage lorsque le volet de verrouillage 6 est déplacé dans sa position relevée, et de déplacer la came 29 dans sa position de desserrage lorsque le volet de verrouillage 6 est déplacé dans sa position rabattue.

Le dispositif d'actionnement 28 est prévu pour transformer le mouvement d'articulation, c'est-à-dire de rotation, du volet de verrouillage 6 en un mouvement de rotation de la came 29.

Le dispositif d'actionnement 28 comporte plusieurs biellettes, dont une première biellette 30 et une deuxième biellette 31, ainsi qu'une tige de liaison 32 reliant ces dernières, et formant ensemble une chaîne de transmission de mouvement permettant de réaliser cette transformation.

La première biellette 30 est assujettie mécaniquement à rotation au volet de verrouillage 6, tandis que la deuxième biellette 31 est assujettie mécaniquement à rotation à la came 29.

La platine de montage 19 présente, sur la troisième portion 23, une première lumière 33 dans laquelle la tige de liaison 32 peut coulisser.

La première lumière 33 est ici rectiligne, autrement dit, la tige de liaison 32 coulisse en translation dans la première lumière 33.

La chaîne de transmission de mouvement ainsi formée réalise une transformation intermédiaire du mouvement de rotation du volet de verrouillage 6 en un mouvement de translation de la tige de liaison 32, puis une transformation de ce mouvement de translation en un mouvement de rotation de la came 29.

Par exemple, la tige de liaison 32 comprend une entretoise 34 et un boulon 35 inséré dans l'entretoise 34.

La deuxième biellette 31 est munie d'un premier œillet de fixation à une première de ses extrémités, et d'un deuxième œillet de fixation à une deuxième extrémité opposé à la première extrémité.

D'une part, la deuxième biellette 31 est assujettie à rotation par son premier œillet de fixation à la came 29, par exemple par vissage ou boulonnage.

La fixation de la deuxième biellette 31 à la came 29 est réalisée en un point de fixation qui est distinct du point d'attache de la came 29 à la patte de support 27, de sorte à ce que lorsque la deuxième biellette 31 est mise en mouvement, elle exerce un moment de force sur la came 29 pour l'entrainer en rotation.

D'autre part, la deuxième biellette 31 est assujettie à rotation par son deuxième œillet de fixation à la tige de liaison 32, ici en étant prise entre un écrou du boulon 35 et l'entretoise 34.

Dans le mode de réalisation illustré, la platine de montage 19 comporte une patte de positionnement 36 s'étendant depuis la deuxième portion 22 sensiblement au niveau de la patte de support 27 et reliant la troisième portion 23.

La patte de positionnement 36 est munie, d'une deuxième lumière 37 qui est ici configurée pour autoriser le passage de la deuxième biellette 31, et qui permet de maintenir celle-ci en position transversalement.

La patte de positionnement 36 présente également une troisième lumière 38 qui est configurée pour autoriser le passage du câble d'entraînement 9.

La première biellette 30 est de manière similaire munie d'un premier œillet de fixation à une première de ses extrémités, et d'un deuxième œillet de fixation à une deuxième extrémité opposé à la première extrémité (visible plus en détail sur la figure 5).

La première biellette 30 est fixée d'une part à rotation à la tige de liaison 32 par son premier œillet de fixation, par exemple en étant prise entre la tête d'une vis du boulon 35 et l'entretoise 34.

Ainsi, tandis que la première biellette 30 est située d'un côté de la troisième portion 23 de la platine de montage 19, orientée vers l'intérieur de la structure de recouvrement 2, la deuxième biellette 31 est située de l'autre côté de la troisième portion 3, orientée vers l'extérieur de la structure de recouvrement 2.

La première biellette 30 est fixée d'autre part à rotation au volet de verrouillage 6.

Ici, la première biellette 30 possède un degré de liberté en translation par rapport au volet de verrouillage 6.

Le dispositif d'actionnement 28 comporte un corps d'attache 39, qui est assujetti au volet de verrouillage 6.

Le corps d'attache 39 présente une platine de fixation 40 qui est fixée, par exemple par vissage ou boulonnage, au volet de verrouillage 6, et une portion d'arc de cercle 41 qui s'étend à angle droit depuis la platine de fixation 40, en direction de la platine de montage 19.

La portion d'arc de cercle 41 présente une fenêtre de guidage 42, ou boutonnière, qui s'étend ici depuis une extrémité libre de la portion d'arc de cercle 41 en direction de l'extrémité opposée rattachée à la platine de fixation 40. La boutonnière présente une forme courbée.

La première biellette 30 comporte, au niveau de sa deuxième extrémité, un doigt de coulissement 43 qui saille latéralement et qui est ici formé par un boulon.

La boutonnière 42 est configurée pour que le doigt de coulissement 43 puisse y coulisser, entre un premier fond de boutonnière 44 et un second fond de boutonnière 45 opposé au premier fond de boutonnière 44 (visibles plus en détail sur la figure 5), que comporte la boutonnière 42.

Ainsi, la boutonnière 42 définit une plage angulaire tampon dans laquelle la came 29 n'est pas entrainée en rotation lorsque le volet de verrouillage 6 est entraîné en rotation.

Lorsque le volet de verrouillage 6 est en position relevée, le doigt de coulissement 43 est en butée contre le premier fond de boutonnière 44, tandis que lorsque le volet de verrouillage 6 est en position rabattue, le doigt de coulissement 43 est en butée contre le second fond de boutonnière 45.

En outre, comme cela est visible plus en détail sur la figure 5, la première biellette 30 peut être réalisée en deux parties, dont une première partie de biellette 46 et une deuxième partie de biellette 47, correspondant chacune globalement à une demi-biellette et qui sont reliées mécaniquement entre elles.

La première biellette 30 peut comporter un mécanisme d'ajustement 48 entre la première partie de biellette 46 et la deuxième partie de biellette 47, qui permet de relier mécaniquement les deux parties tout en permettant de faire varier la longueur de la biellette 30.

Par exemple, le mécanisme d'ajustement 48 est formé par une tige filetée qui traverse un premier ensemble et un deuxième ensemble formés chacun par un écrou et un manchon, avec le manchon de chacun des ensembles étant respectivement assujetti mécaniquement à une partie de biellette.

Il convient de préciser que dans la description qui précède, l'ensemble des éléments du dispositif d'entrainement peuvent être dédoublés, et être agencés de façon sensiblement symétrique de chaque côté du véhicule.

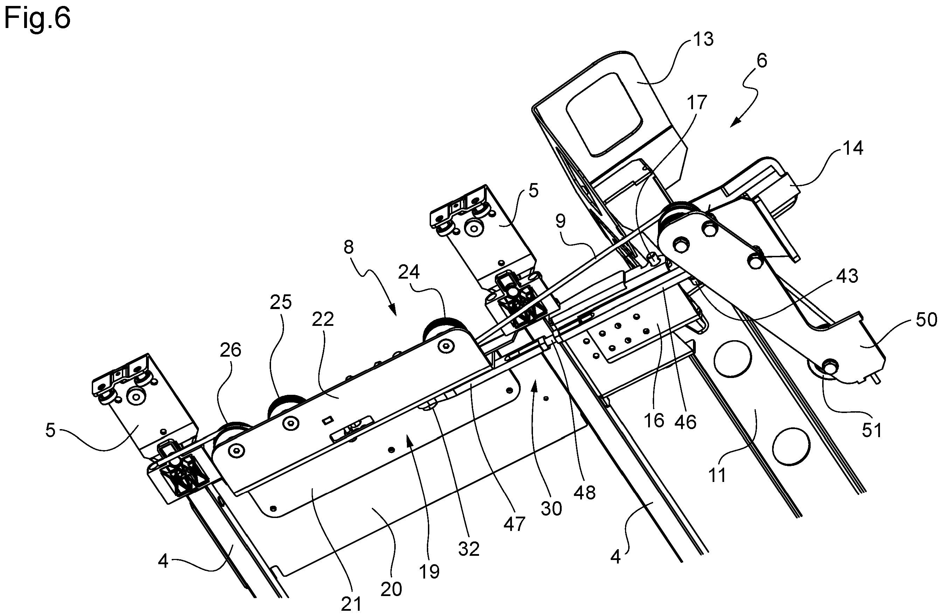

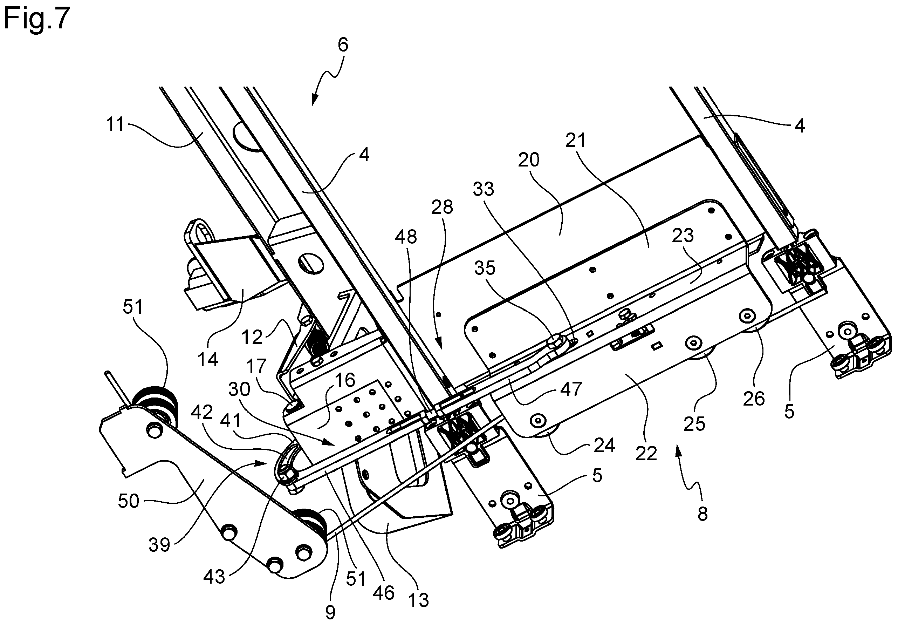

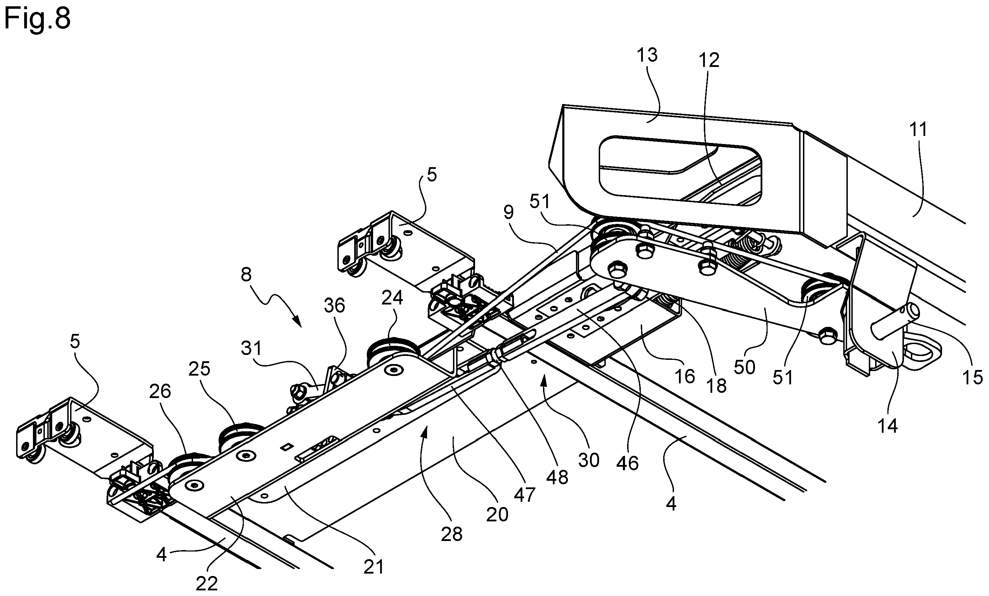

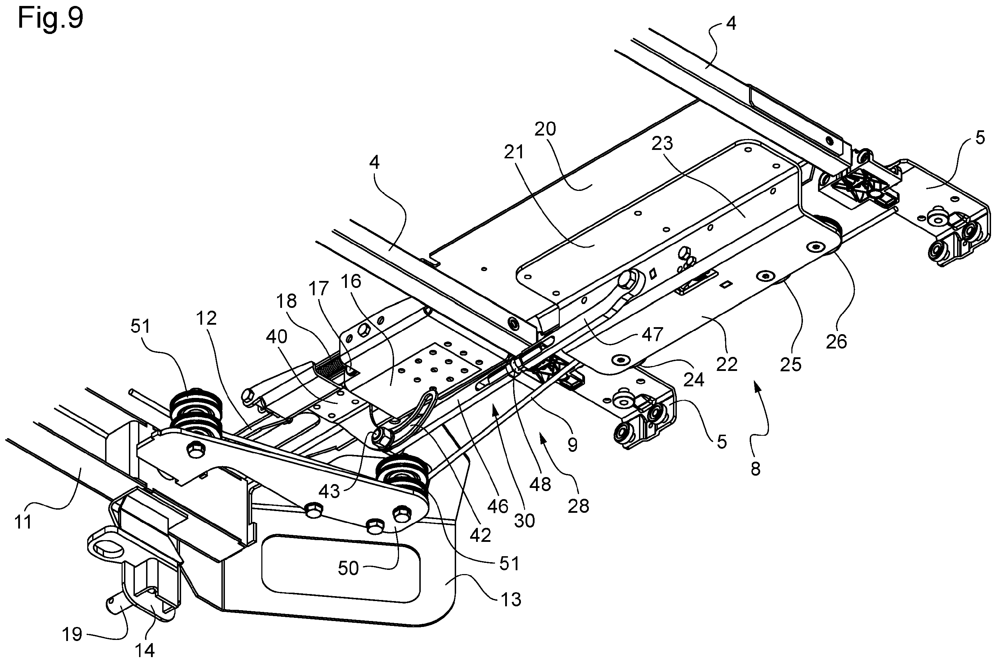

On va maintenant décrire le fonctionnement de l'ensemble de recouvrement 1 lorsqu'il est manipulé, d'abord lorsque la remorque est recouverte au moyen de la structure de recouvrement 2, puis lorsque la remorque est découverte, notamment en référence aux figures 3 et 4 et 6 à 9 qui montrent l'ensemble de recouvrement avec le volet de verrouillage relevé ou rabattu selon les vues.

Dans une configuration de départ non illustrée, la structure de recouvrement 2 est repliée et se trouve globalement à l'arrière du véhicule.

Dans cette configuration, la structure de recouvrement 2 n'est pas verrouillée en position dépliée et le volet de verrouillage 6 est par conséquent en position relevée.

Comme il a été décrit ci-avant, la came 29 se trouve alors en position de serrage, dans laquelle elle est plaquée contre le câble d'entrainement 9 qui est serré entre la came 29 et la deuxième portion 22.

Autrement dit, le câble d'entrainement 9 et la structure de recouvrement 2 sont assujettis, par l'intermédiaire du dispositif d'entrainement.

Le câble d'entrainement 9 peut être mis en mouvement au moyen du système motorisé, c'est-à-dire qu'il se déplace ici en direction de l'avant du véhicule.

Lorsque la première extrémité 7 de la structure de recouvrement 2 se trouve sensiblement en vis-à-vis du panneau avant du véhicule, la structure de recouvrement 2 est dépliée et le volet de verrouillage 6 est pivoté dans sa position rabattue.

Comme décrit ci-avant, le volet de verrouillage 6 en position rabattue peut être verrouillé mécaniquement au panneau avant du véhicule, par exemple au moyen du doigt de verrouillage 15 coopérant avec un élément de verrouillage du panneau avant.

Ceci permet d'éviter tout déverrouillage intempestif du volet de verrouillage 6, notamment lorsque celui-ci est comporte l'organe de rappel 18 qui est configuré pour le maintenir en position relevée.

Lors de la rotation du volet de verrouillage 6 depuis la position relevée vers la position rabattue, le came 29 est entrainée en rotation depuis sa position de serrage vers sa position de desserrage.

Dans la position relevée du volet de verrouillage 6, le doigt de coulissement 43 est en butée contre le premier fond de boutonnière 44.

La première biellette 30 est dans une position avancée en direction du volet de verrouillage 6, la tige de liaison 32 est dans une position avancée dans la première lumière 33, et la deuxième biellette 31 est également dans une position avancée dans laquelle elle tire sur la came 29.

Ainsi, la came 29, soumise à un moment de force, est pivotée en direction du volet de verrouillage 6, dans le sens horaire sur les vues représentées, et est mise en appui contre le câble d'entrainement 9, dans sa position de serrage.

Le volet de verrouillage 6 est ensuite pivoté depuis sa position relevée vers une première position intermédiaire, distincte de sa position relevée et de sa position rabattue, puis de sa première position intermédiaire vers la position rabattue.

Lors de son mouvement entre la position relevée vers la première position intermédiaire, le volet de verrouillage 6 parcourt une plage angulaire tampon, sur laquelle le doigt de coulissement 43 de la première biellette 30 coulisse relativement à la boutonnière 42, jusqu'à se trouver en butée contre le second fond de boutonnière 45.

Ainsi, au cours de ce mouvement, la première biellette 30, et par conséquent l'ensemble du dispositif d'actionnement 28 et la came 29 restent sensiblement immobiles, tandis que le volet de verrouillage 6 est pivoté.

Dans la première position intermédiaire du volet de verrouillage 6, la came 29 est donc toujours en position de serrage.

Puis, lorsque le volet de verrouillage 6 est pivoté de la première position intermédiaire vers la position rabattue, le doigt de coulissement 43 en butée contre le second fond de boutonnière 45 est déplacé avec le volet de verrouillage 6.

La première biellette 30 est entrainée en mouvement dans une position reculée en éloignement du volet de verrouillage 6, entrainant la tige de liaison 32 dans une position reculée dans la première lumière 33, entrainant elle-même la deuxième biellette 31 dans une position reculée dans laquelle elle appuie sur la came 29.

La came 29 est ainsi progressivement pivotée en éloignement du volet de verrouillage 6, dans le sens anti-horaire sur les vues représentées, et sa mise en appui contre le câble d'entrainement 9 est levée, c'est-à-dire qu'elle se trouve dans sa position de desserrage.

Le mouvement de rotation de la came 29 depuis la position de serrage vers la position de desserrage peut être accompagné par l'élément de rappel 49 lorsque le dispositif d'entrainement le comporte.

Dans une configuration de l'ensemble de recouvrement 1 dans laquelle la structure de recouvrement 2 est en position dépliée et le volet de verrouillage 6 est en position rabattue, le câble d'entrainement 9 et la structure de recouvrement 2 sont désassujettis et cette dernière ne peut être entrainée en mouvement même si le câble d'entrainement 9 est entrainé en mouvement.

Partant d'une telle configuration, lorsque le volet de verrouillage 6 est déplacé dans sa position relevée, une cinématique inverse à celle décrite ci-avant s'opère.

Le doigt de coulissement 43, qui est d'abord en butée contre le second fond de boutonnière 45, coulisse relativement à la boutonnière 42 sur la plage angulaire tampon jusqu'à se trouver en butée contre le premier fond de boutonnière 44, le volet de verrouillage 6 étant dans une deuxième position intermédiaire.

Lors de cette première phase de mouvement, la première biellette 30, la deuxième biellette 31 et la tige de liaison 32 restent sensiblement immobiles, la came 29 étant toujours en position de desserrage à l'issue de cette première phase de mouvement.

Ensuite, lorsque le volet de verrouillage 6 est pivoté depuis la deuxième position intermédiaire vers la position relevée, il entraine avec lui la première biellette 30 depuis la position reculée vers la position avancée, elle-même entrainant la tige de liaison 32 et la deuxième biellette 31 depuis leur position reculée vers leur position avancée.

La came 29 bascule alors progressivement en rapprochement du volet de verrouillage 6, depuis sa position de desserrage vers sa position de serrage, sous l'effet de la deuxième biellette 31 qui tire sur la came 29.

Lorsque le volet de verrouillage 6 est dans sa position relevée, le câble d'entrainement 9 est assujetti par serrage à la structure de recouvrement 2, qui peut être déplacée depuis sa position dépliée à une position repliée ou partiellement repliée.

On souligne que le serrage du câble d'entrainement 9 peut être ajusté en faisant varier la longueur de la première biellette 30, lorsque celle-ci présente un mécanisme d'ajustement 48.

Lorsque le câble d'entrainement 9 n'est pas assez serré entre la came 29 et la deuxième portion 22 de la platine de montage 19, ce qui représente un risque de glissement entre le câble 9 et la structure de recouvrement 2, la première biellette 30 peut être raccourcie, et inversement, lorsque le câble d'entrainement 9 est trop serré, ce qui représente un risque de détérioration du câble 9, notamment s'il est tressé à partir de fils, la première biellette 30 peut être rallongée.

L'ensemble de recouvrement 1 décrit ci-dessus est particulièrement commode en ce qu'il permet de désassujettir le câble d'entrainement 9 et la structure de recouvrement 2 lorsque celle-ci est dépliée et verrouillée sur le véhicule, et assujettir le câble d'entrainement 9 et la structure de recouvrement 2 lorsque celle-ci est déverrouillée en vue de son déplacement vers ou depuis une position repliée ou partiellement repliée.

Ceci est réalisé concomitamment à la manipulation du volet de verrouillage 6, et n'implique aucune étape de manipulation supplémentaire.

Dans des variantes non illustrées :
- Le dispositif d'actionnement ne comporte qu'une seule biellette, ou plus de deux biellettes.
- Le dispositif d'actionnement agit par poussée pour déplacer la came de sa position de desserrage vers sa position de serrage, plutôt que par tirage.
- La première biellette est fixée à rotation au corps d'attache sans pouvoir entrer en translation par rapport à ce dernier, et en particulier le corps d'attache peut alors ne pas comporter de boutonnière.
- La came peut être de toute autre forme que celle représentée sur les figures, et qui est adaptée pour être mise progressivement en appui avec le câble d'entrainement pour serrer ce dernier.
- La première et la deuxième position intermédiaire du volet de verrouillage peuvent être identiques.
- La structure de recouvrement peut être configurée pour recouvrir un côté du véhicule, c'est-à-dire une face latérale ou la face arrière du véhicule.
- Le système motorisé peut être optionnel. L'ensemble de recouvrement peut par exemple comprendre un système manuel de mise en mouvement du câble d'entrainement.
- L'ensemble de recouvrement peut comprendre plusieurs structures de recouvrement et mécanismes de recouvrement, par exemple une structure de recouvrement d'un toit du véhicule, et un ou plusieurs structures de recouvrement des faces latérales et/ou arrière du véhicule. Les structures de recouvrement peuvent être configurée pour être entrainées simultanément en mouvement, ou non. Tout ou partie des structures de recouvrement peuvent être entrainées en mouvement par un système motorisé, ou non.
- La structure de recouvrement peut être différente d'une bâche, par exemple une structure à panneaux semi-rigides.
- Le véhicule peut être différent d'une remorque de camion, par exemple une remorque agricole, ou bien une caravane ou une caisse pour véhicule du type pick-up.

On rappelle plus généralement que l'invention ne se limite pas aux exemples décrits et représentés

## Revendications

1. Ensemble de recouvrement (1) configuré pour équiper un véhicule, comportant une structure de recouvrement (2) mobile à coulissement par rapport au véhicule et un mécanisme d'entrainement (8) configuré pour faire passer la structure de recouvrement (2) depuis une configuration dépliée vers une configuration repliée ou partiellement repliée, et inversement, la structure de recouvrement (2) comportant à une première extrémité (7) un volet de verrouillage (6) qui est articulé et configuré pour admettre une position rabattue et une position relevée ; le mécanisme d'entrainement (8) comportant un câble d'entrainement (9) et **caractérisé en ce que** le mécanisme d'entrainement comporte un dispositif d'entrainement (10) pourvu d'un organe de serrage (29) configuré pour admettre une position de serrage du câble d'entraînement (9) et une position de desserrage du câble d'entraînement (9), ainsi qu'un dispositif d'actionnement (28) assujetti mécaniquement d'une part à l'organe de serrage (29) et d'autre part au volet de verrouillage (6), et qui est configuré pour mettre en appui l'organe de serrage (29) contre le câble d'entrainement (9) lorsque le volet de verrouillage (6) est articulé depuis sa position rabattue vers sa position relevée et pour écarter l'organe de serrage (29) du câble d'entrainement (9) lorsque le volet de verrouillage (6) est articulé depuis sa position relevée vers sa position rabattue.

2. Ensemble de recouvrement (1) selon la revendication 1, **caractérisé en ce que** l'organe de serrage (29) est mobile en rotation entre la position de serrage du câble d'entraînement (9) et la position de desserrage du câble d'entraînement (9).

3. Ensemble de recouvrement (1) selon l'une des revendications 1 et 2, **caractérisé en ce que** le dispositif d'entrainement (10) comprend un élément de rappel (49) configuré pour rappeler l'organe de serrage (29) dans sa position de desserrage.

4. Ensemble de recouvrement (1) selon l'une quelconque des revendications 1 à 3, **caractérisé en ce que** l'organe de serrage (29) comporte une came mobile en rotation et à laquelle est assujetti le dispositif d'actionnement (28), la came étant configurée pour être progressivement mise en appui contre le câble d'entrainement (9) lorsque le volet de verrouillage (6) est articulé depuis sa position rabattue vers sa position relevée, et pour être progressivement écartée du câble d'entrainement (9) lorsque le volet de verrouillage (6) est articulé depuis sa position relevée vers sa position rabattue.

5. Ensemble de recouvrement (1) selon l'une quelconque des revendications 1 à 4, **caractérisé en ce que** le mécanisme d'entrainement (8) comporte une platine de montage (19) assujettie mécaniquement à la structure de recouvrement (2), et une patte de support (27) assujettie mécaniquement à la platine de montage et supportant l'organe de serrage (29), avec le câble d'entrainement (9) qui est disposé entre l'organe de serrage (29) et la platine de montage (19).

6. Ensemble de recouvrement (1) selon l'une quelconque des revendications 1 à 5, **caractérisé en ce que** le dispositif d'actionnement (28) est configuré pour transformer un mouvement d'articulation du volet de verrouillage (6) en un mouvement de rotation de l'organe de serrage (29).

7. Ensemble de recouvrement (1) selon la revendication 6, **caractérisé en ce que** le dispositif d'actionnement (28) est configuré pour transformer un mouvement d'articulation du volet de verrouillage (6) en un mouvement intermédiaire de translation, et pour transformer le mouvement intermédiaire de translation en un mouvement de rotation de l'organe de serrage (29).

8. Ensemble de recouvrement (1) selon l'une des revendications 6 et 7, **caractérisé en ce que** le dispositif d'actionnement (28) comporte au moins une biellette assujettie mécaniquement à l'organe de serrage (29) et un corps d'attache (39) assujetti mécaniquement d'une part au volet de verrouillage (6) et d'autre part à l'au moins une biellette.

9. Ensemble de recouvrement (1) selon la revendication 8, **caractérisé en ce que** le corps d'attache (39) comprend une fenêtre de guidage (42) dans laquelle l'au moins une biellette peut coulisser.

10. Ensemble de recouvrement (1) selon l'une des revendications 8 et 9, **caractérisé en ce que** l'au moins une biellette comporte une première partie de biellette et une deuxième partie de biellette, et un mécanisme d'ajustement reliant la première partie de biellette et la deuxième partie de biellette et configuré pour faire varier en longueur ladite au moins une biellette

11. Ensemble de recouvrement (1) selon l'une quelconque des revendications 8 à 10, **caractérisé en ce que** le dispositif d'actionnement (28) comporte une première biellette (30) assujettie mécaniquement au corps d'attache (39), une deuxième biellette (31) assujettie mécaniquement à l'organe de serrage (29), et une tige de liaison (32) mobile en translation et reliant mécaniquement la première biellette (30) et la deuxième biellette (31).

12. Ensemble de recouvrement (1) selon l'une quelconque des revendications 1 à 11, **caractérisé en ce que** le volet de verrouillage (6) comporte un organe de rappel (18) configuré pour rappeler le volet de verrouillage respectivement dans sa position relevée et dans sa position rabattue.

13. Véhicule (102), notamment du type remorque pour camion, comportant un ensemble de recouvrement (1) selon l'une quelconque des revendications 1 à 12.

14. Véhicule (102) selon la revendication 13, **caractérisé en ce que** le véhicule comprend un toit et un châssis en regard du toit et définissant avec le toit, des côtés du véhicule et **en ce que** dans l'ensemble de recouvrement (1), la structure de recouvrement (2) est formée par une bâche au moins partiellement flexible et montée sur le toit du véhicule ou sur au moins un des côtés du véhicule.

15. Véhicule (102) selon l'une des revendications 13 et 14, **caractérisé en ce qu'**il comprend au moins une paire de longerons (106) sur lesquels la structure de recouvrement (2) est montée mobile à coulissement, et un panneau (109) agencé en saillie du châssis vers le toit du véhicule et sur lequel le volet de verrouillage (6) est configuré pour être rabattu dans une configuration dans laquelle la structure de recouvrement (2) est dépliée et recouvre le toit ou un des côtés du véhicule.

16. Véhicule (102) selon la revendication 15, **caractérisé en ce qu'**il comprend un système motorisé (110) configuré pour entrainer en coulissement la structure de recouvrement (2) et qui est agencé sur le panneau (109) du véhicule (102) ou sur ou sous le châssis (111).

## Patentansprüche

1. Abdeckbaugruppe (1), die zur Ausstattung eines Fahrzeugs eingerichtet ist, eine gegenüber dem Fahrzeug verschiebbare Abdeckstruktur (2) und einen Antriebsmechanismus (8) aufweist, der so ausgebildet ist, dass er die Abdeckstruktur (2) von einer ausgeklappten Ausbildung in eine eingeklappte oder teilweise eingeklappte Ausbildung, und umgekehrt, überführt, wobei die Abdeckstruktur (2) an einem ersten Ende (7) eine Verriegelungsklappe (6) aufweist, die gelenkig ist und so ausgebildet ist, dass sie eine umgeklappte Position und eine angehobene Position zulässt;
wobei der Antriebsmechanismus (8) ein Antriebskabel (9) aufweist und **dadurch gekennzeichnet ist, dass** der Antriebsmechanismus eine Antriebsvorrichtung (10), die mit einem Spannorgan (29) versehen ist, das so ausgebildet ist, dass es eine Spannposition des Antriebskabels (9) und eine Löseposition des Antriebskabels (9) zulässt, sowie eine Betätigungsvorrichtung (28) aufweist, die einerseits mechanisch mit dem Spannorgan (29) und andererseits mit der Verriegelungsklappe (6) verbunden ist und die so ausgebildet ist, dass sie das Spannorgan (29) gegen das Antriebskabel (9) drückt, wenn die Verriegelungsklappe (6) von ihrer abgesenkten Position in ihre angehobene Position gelenkt wird, und dass sie das Spannorgan (29) vom Antriebskabel (9) wegbewegt, wenn die Verriegelungsklappe (6) von ihrer angehobenen Position in ihre umgeklappte Position gelenkt wird.

2. Abdeckbaugruppe (1) nach Anspruch 1, **dadurch gekennzeichnet, dass** das Spannorgan (29) zwischen der Spannposition des Antriebskabels (9) und der Löseposition des Antriebskabels (9) drehbar ist.

3. Abdeckbaugruppe (1) nach einem der Ansprüche 1 und 2, **dadurch gekennzeichnet, dass** die Antriebsvorrichtung (10) ein Rückstellelement (49) umfasst, das so ausgebildet ist, dass es das Spannorgan (29) in seine Löseposition zurückstellt.

4. Abdeckbaugruppe (1) nach einem der Ansprüche 1 bis 3, **dadurch gekennzeichnet, dass** das Spannorgan (29) einen drehbeweglichen Nocken aufweist, mit dem die Betätigungsvorrichtung (28) verbunden ist, wobei der Nocken so ausgebildet ist, dass er schrittweise progressiv gegen das Antriebskabel (9) gedrückt wird, wenn die Verriegelungsklappe (6) von ihrer abgesenkten Position in ihre angehobene Position gelenkt wird, und schrittweise vom Antriebskabel (9) wegbewegt wird, wenn die Verriegelungsklappe (6) aus der angehobenen Position in die umgeklappte Position gelenkt wird.

5. Abdeckbaugruppe (1) nach einem der Ansprüche 1 bis 4, **dadurch gekennzeichnet, dass** der Antriebsmechanismus (8) eine Montageplatte (19), die mechanisch mit der Abdeckstruktur (2) verbunden ist, und eine Stützlasche (27) aufweist, die mechanisch mit der Montageplatte verbunden ist und das Spannorgan (29) trägt, wobei das Antriebskabel (9) zwischen dem Spannorgan (29) und der Montageplatte (19) angeordnet ist.

6. Abdeckbaugruppe (1) nach einem der Ansprüche 1 bis 5, **dadurch gekennzeichnet, dass** die Betätigungsvorrichtung (28) so ausgebildet ist, dass sie eine Gelenkbewegung der Verriegelungsklappe (6) in eine Drehbewegung des Spannorgans (29) umwandelt.

7. Abdeckbaugruppe (1) nach Anspruch 6, **dadurch gekennzeichnet, dass** die Betätigungsvorrichtung (28) so ausgebildet ist, dass sie eine Gelenkbewegung der Verriegelungsklappe (6) in eine translatorische Zwischenbewegung umwandelt und die Zwischenbewegung der Verschiebung in eine Drehbewegung des Spannorgans (29) umwandelt.

8. Abdeckbaugruppe (1) nach einem der Ansprüche 6 und 7, **dadurch gekennzeichnet, dass** die Betätigungsvorrichtung (28) mindestens eine mit dem Spannorgan (29) mechanisch gesicherte Stange und einen einerseits mit der Verriegelungsklappe (6) und andererseits mit mindestens einer Stange mechanisch gesicherten Verbindungskörper (39) aufweist.

9. Abdeckbaugruppe (1) nach Anspruch 8, **dadurch gekennzeichnet, dass** der Verbindungskörper (39) ein Führungsfenster (42) umfasst, in das die mindestens eine Stange gleiten kann.

10. Abdeckbaugruppe (1) nach einem der Ansprüche 8 und 9, **dadurch gekennzeichnet, dass** die mindestens eine Stange einen ersten Stangenteil und einen zweiten Stangenteil sowie einen Einstellmechanismus aufweist, der den ersten Stangenteil und den zweiten Stangenteil verbindet und so ausgebildet ist, dass er die Länge der mindestens einen Stange variiert.

11. Abdeckbaugruppe (1) nach einem der Ansprüche 8 bis 10, **dadurch gekennzeichnet, dass** die Betätigungsvorrichtung (28) eine erste, mechanisch mit dem Verbindungskörper (39) verbundene Stange (30), eine zweite, mechanisch mit dem Spannorgan (29) verbundene Stange (31) und eine in Translation bewegliche Verbindungsstange (32) aufweist, die die erste Stange (30) und die zweite Stange (31) mechanisch verbindet.

12. Abdeckbaugruppe (1) nach einem der Ansprüche 1 bis 11, **dadurch gekennzeichnet, dass** die Verriegelungsklappe (6) ein Rückstellorgan (18) aufweist, das so ausgebildet ist, dass es die Verriegelungsklappe jeweils in ihre angehobene Position und in ihre umgeklappte Position zurückstellt.

13. Fahrzeug (102), insbesondere vom Typ Lkw-Anhänger, das eine Abdeckbaugruppe (1) nach einem der Ansprüche 1 bis 12 aufweist.

14. Fahrzeug (102) nach Anspruch 13, **dadurch gekennzeichnet, dass** das Fahrzeug ein Dach und ein Fahrgestell umfasst, das dem Dach gegenüberliegt und mit dem Dach die Fahrzeugseiten definiert, und dadurch, dass in der Abdeckbaugruppe (1) die Abdeckstruktur (2) durch eine mindestens teilweise flexible Plane gebildet ist und auf dem Fahrzeugdach oder auf mindestens einer Fahrzeugseite montiert ist.

15. Fahrzeug (102) nach einem der Ansprüche 13 und 14, **dadurch gekennzeichnet, dass** es mindestens ein Längsträgerpaar (106) umfasst, an dem die Abdeckstruktur (2) verschiebbar montiert ist, und eine Platte (109), die vom Fahrgestell zum Fahrzeugdach vorsteht und an der die Verriegelungsklappe (6) so ausgebildet ist, dass sie in einer Ausbildung abgesenkt wird, in der die Abdeckstruktur (2) ausgeklappt ist und das Dach oder eine der Fahrzeugseiten abdeckt.

16. Fahrzeug (102) nach Anspruch 15, **dadurch gekennzeichnet, dass** es ein motorisiertes System (110) umfasst, das so ausgebildet ist, dass es die Abdeckstruktur (2) verschiebbar antreibt, und das auf der Platte (109) des Fahrzeugs (102) oder auf oder unter dem Fahrgestell (111) angeordnet ist.

## Claims

1. A covering assembly (1) configured to equip a vehicle, comprising a covering structure (2) slidably movable relative to the vehicle and a drive mechanism (8) configured to make the covering structure (2) switch from an unfolded configuration into a folded or partially folded configuration, and vice versa, the covering structure (2) comprising at a first end (7) a locking flap (6) which is articulated and configured to take on a folded back position and a raised position;
the drive mechanism (8) comprising a drive cable (9) and **characterised in that** the drive mechanism comprises a drive device (10) provided with a clamping member (29) configured to take on a position of clamping the drive cable (9) and a position of unclamping the drive cable (9), as well as an actuating device (28) mechanically attached, on the one hand, to the clamping member (29) and, on the other hand, to the locking flap (6), and which is configured to press the clamping member (29) against the drive cable (9) when the locking flap (6) is articulated from its folded back position into its raised position and to move the clamping member (29) away from the drive cable (9) when the locking flap (6) is articulated from its raised position into its folded back position.

2. The covering assembly (1) according to claim 1, **characterised in that** the clamping member (29) is rotatably movable between the position of clamping the drive cable (9) and the position of unclamping the drive cable (9).

3. The covering assembly (1) according to one of claims 1 and 2, **characterised in that** the drive device (10) comprises a return element (49) configured to return the clamping member (29) to its unclamping position.

4. The covering assembly (1) according to any one of claims 1 to 3, **characterised in that** the clamping member (29) comprises a rotatably movable cam to which the actuating device (28) is attached, the cam being configured to be progressively pressed against the drive cable (9) when the locking flap (6) is articulated from its folded back position into its raised position, and to be progressively moved away from the drive cable (9) when the locking flap (6) is articulated from its raised position into its folded back position.

5. The covering assembly (1) according to any one of claims 1 to 4, **characterised in that** the drive mechanism (8) comprises a mounting plate (19) mechanically attached to the covering structure (2), and a support tab (27) mechanically attached to the mounting plate and supporting the clamping member (29), with the drive cable (9) which is disposed between the clamping member (29) and the mounting plate (19).

6. The covering assembly (1) according to any one of claims 1 to 5, **characterised in that** the actuating device (28) is configured to transform an articulation movement of the locking flap (6) into a rotational movement of the clamping member (29).

7. The covering assembly (1) according to claim 6, **characterised in that** the actuating device (28) is configured to transform an articulation movement of the locking flap (6) into an intermediate translational movement, and to transform the intermediate translational movement into a rotational movement of the clamping member (29).

8. The covering assembly (1) according to one of claims 6 and 7, **characterised in that** the actuating device (28) comprises at least one link mechanically attached to the clamping member (29) and a fastening body (39) mechanically attached on the one hand to the locking flap (6) and on the other hand to the at least one link.

9. The covering assembly (1) according to claim 8, **characterised in that** the fastening body (39) comprises a guide window (42) in which the at least one link can slide.

10. The covering assembly (1) according to one of claims 8 and 9, **characterised in that** the at least one link comprises a first link part and a second link part, and an adjustment mechanism connecting the first link part and the second link part and configured to vary said at least one link in length.

11. The covering assembly (1) according to any one of claims 8 to 10, **characterised in that** the actuating device (28) comprises a first link (30) mechanically attached to the fastening body (39), a second link (31) mechanically attached to the clamping member (29), and a connecting rod (32) translationally movable and mechanically connecting the first link (30) and the second link (31).

12. The covering assembly (1) according to any one of claims 1 to 11, **characterised in that** the locking flap (6) comprises a return member (18) configured to return the locking flap respectively in its raised position and in its folded back position.

13. A vehicle (102), in particular of the truck trailer type, comprising a covering assembly (1) according to any one of claims 1 to 12.

14. The vehicle (102) according to claim 13, **characterised in that** the vehicle comprises a roof and a chassis facing the roof and defining with the roof, sides of the vehicle and **in that** in the covering assembly (1), the covering structure (2) is formed by an at least partially flexible tarpaulin and mounted to the roof of the vehicle or to at least one side of the vehicle.

15. The vehicle (102) according to one of claims 13 and 14, **characterised in that** it comprises at least one pair of stringers (106) on which the covering structure (2) is slidably movably mounted, and a panel (109) arranged as a projection from the chassis towards the roof of the vehicle and on which the locking flap (6) is configured to be folded back in a configuration in which the covering structure (2) is unfolded and covers the roof or one of the sides of the vehicle.

16. The vehicle (102) according to claim 15, **characterised in that** it comprises a motor-drive system (110) configured to slidably drive the covering structure (2) and which is arranged on the panel (109) of the vehicle (102) or on or under the chassis (111).
